# DEMANDE DE BREVET EUROPEEN

(11) **EP 3 561 973 A1**
(43) Date de publication de la demande: **30.10.2019**
(21) Numéro de dépôt: 18168726.0
(22) Date de dépôt: 23.04.2018
(51) Int. Cl.: H01T 2/02, H01T 4/16, H01T 15/00, H01T 1/22, H01T 1/02

(54) **DISPOSITIF DE PROTECTION CONFIGURÉ POUR PERMETTRE UNE CIRCULATION D'UN COURANT DE DÉCHARGE**

(71) Demandeur: ABB Schweiz AG, 5400 Baden (CH)
(72) Inventeur: GAUTIER, Boris, 65100 LOURDES (FR); DUBAU, Benoit, 65600 SEMEAC (FR)
(74) Mandataire: Verriest, Philippe

(57) **Abrégé**

Dispositif de protection (1) configuré pour permettre une circulation d'un courant de décharge comprenant : un premier éclateur (7) pourvu d'une première électrode d'initiation (9) et d'une première électrode d'amorçage (11) distante ; un deuxième éclateur (13) pourvu d'une deuxième électrode d'initiation (15) et d'une deuxième électrode d'amorçage (17) distante ; la première électrode d'initiation (9) étant reliée électriquement au premier point (3) et la deuxième électrode d'amorçage (17) étant reliée électriquement au deuxième point (5) ; la première électrode d'amorçage (11) étant reliée électriquement à la deuxième électrode d'initiation (15) ; un agencement de réduction de tension d'amorçage (19) pourvu d'une première électrode auxiliaire (21) disposée entre la première électrode d'initiation (9) et la première électrode d'amorçage (11) et d'une deuxième électrode auxiliaire (25) disposée entre la deuxième électrode d'initiation (15) et la deuxième électrode d'amorçage (17) ; l'agencement de réduction de tension d'amorçage (19) comprenant en outre une première branche (31) dotée d'un premier composant impédant (35) et une deuxième branche (33) dotée d'un deuxième composant impédant (45) ; la première branche (31) reliant électriquement la première électrode auxiliaire (21) au deuxième point (5).

## Description

### Domaine de l'invention

La présente invention concerne un dispositif de protection configuré pour permettre une circulation d'un courant de décharge entre un premier point du dispositif de protection et un deuxième point du dispositif de protection lorsqu'une tension appliquée entre le premier point et le deuxième point est supérieure à une tension seuil.

### Art antérieur

Il est connu d'utiliser un dispositif de protection ou éclateur pour protéger une installation électrique d'éventuels dégâts dus à la foudre. Un tel dispositif de protection permet la circulation d'un courant de décharge entre le premier point et le deuxième point dans le but d'éviter des surtensions trop importantes.

Le dispositif de protection comprend deux électrodes distantes configurées pour le passage du courant de décharge au-delà de la tension seuil. La tension seuil ou tension d'amorçage du dispositif de protection ne doit pas être trop élevée sous peine de réduire l'efficacité de protection.

Il est également connu d'abaisser la tension de seuil d'un éclateur par la formation d'une étincelle entre une électrode auxiliaire placée entre les électrodes principales afin d'ioniser l'espace compris entre les électrodes.

Suite à l'amorçage du dispositif de protection, c'est-à-dire à l'établissement d'un arc électrique entre les électrodes, l'arc électrique doit être interrompu par exemple en utilisant une chambre de déionisation placée à proximité des électrodes.

Une telle chambre de déionisation est composée du plusieurs plaques distantes disposées parallèlement les unes aux autres. Le nombre de plaques nécessaires peut être relativement important ce qui peut conduire à la conception de dispositifs de protection encombrants.

Une possibilité pour remédier à cet encombrement est de prévoir deux dispositifs de protection de tailles réduites connectés en série. Cependant cette disposition a pour conséquence l'augmentation de la tension seuil.

La présente invention vise à résoudre tout ou partie des inconvénients mentionnés ci-dessus.

### Exposé de l'invention

A cet effet, la présente invention concerne un dispositif de protection configuré pour permettre une circulation d'un courant de décharge entre un premier point du dispositif de protection et un deuxième point du dispositif de protection lorsqu'une tension appliquée entre le premier point et le deuxième point est supérieure à une tension seuil, le dispositif de protection comprenant :
- un premier éclateur pourvu d'une première électrode d'initiation et d'une première électrode d'amorçage distante ; un deuxième éclateur pourvu d'une deuxième électrode d'initiation et d'une deuxième électrode d'amorçage distante ; la première électrode d'initiation étant reliée électriquement au premier point et la deuxième électrode d'amorçage étant reliée électriquement au deuxième point; la première électrode d'amorçage étant reliée électriquement à la deuxième électrode d'initiation ;
- un agencement de réduction de tension d'amorçage pourvu d'une première électrode auxiliaire disposée entre la première électrode d'initiation et la première électrode d'amorçage et d'une deuxième électrode auxiliaire disposée entre la deuxième électrode d'initiation et la deuxième électrode d'amorçage ;
l'agencement de réduction de tension d'amorçage comprenant en outre une première branche dotée d'un premier composant impédant et une deuxième branche dotée d'un deuxième composant impédant; la première branche reliant électriquement la première électrode auxiliaire au deuxième point.

Cette disposition permet de réaliser un dispositif de protection compact comprenant deux éclateurs en série tout en limitant la tension seuil ou tension d'amorçage.

En effet, le fait que l'agencement de réduction de tension d'amorçage comprenne une première branche reliant la première électrode auxiliaire au deuxième point engendre, lors du dépassement de la tension seuil, un amorçage en cascade.

Par amorçage en cascade il est entendu que la première branche est tout d'abord conductrice, puis la seconde branche avec le premier éclateur, et enfin les deux éclateurs sont conducteurs.

Ainsi en contournant le deuxième éclateur il est possible de concevoir un dispositif de protection avec une tension seuil relativement faible.

En effet, sans contournement la tension seuil devrait être suffisante pour permettre l'apparition d'un arc entre les électrodes d'initiation et d'amorçage de chaque éclateur, ce qui n'est pas le cas ici puisque le passage du courant par la première branche nécessite seulement la formation d'un arc électrique entre la première électrode d'initiation et la première électrode auxiliaire.

Le dispositif de protection permet ainsi de combiner les avantages de la mise en série de deux éclateurs d'une part dans le but de profiter d'une bonne capacité pour l'utilisation sur des réseaux à fort courant de court-circuit et/ou sous une tension élevée et d'autre part en réduisant la durée d'initiation du fait de la tension seuil limitée.

Selon un aspect de l'invention, le premier éclateur s'étend selon un premier plan et le deuxième éclateur s'étend selon un deuxième plan, le premier plan étant parallèle au deuxième plan. De préférence, le premier éclateur est disposé en regard du deuxième éclateur de manière à ce que le premier point soit en regard du deuxième point. Cette superposition permet d'obtenir un dispositif de protection compact.

Selon un aspect de l'invention, la deuxième branche relie électriquement la deuxième électrode auxiliaire au deuxième point.

Cette disposition permet de s'assurer que le premier arc d'initiation est bien formé avant le deuxième arc d'initiation lorsque la tension entre le premier point et le deuxième point dépasse la tension seuil.

Selon un aspect de l'invention, la deuxième branche relie électriquement la deuxième électrode auxiliaire à la première électrode auxiliaire.

Cette disposition permet également de s'assurer que le premier arc d'initiation est bien formé avant le deuxième arc d'initiation lorsque la tension entre le premier point et le deuxième point dépasse la tension seuil.

Selon un aspect de l'invention, la deuxième branche relie électriquement la deuxième électrode auxiliaire au premier point.

Cette disposition engendre un dispositif de protection symétrique, ce qui en facilite la construction.

Selon un aspect de l'invention, le premier composant impédant présente une impédance définie de manière à ce que, lorsqu'un courant circule dans la première branche et qu'un premier arc électrique d'initiation est formé entre la première électrode d'initiation et la première électrode auxiliaire, un premier arc d'amorçage se forme ensuite entre la première électrode d'initiation et la première électrode d'amorçage et un deuxième arc d'initiation se forme entre la deuxième électrode d'initiation et la deuxième électrode auxiliaire.

En d'autres termes, lorsque la tension appliquée entre le premier point et le deuxième point est supérieure à la tension seuil, le premier arc électrique d'initiation est engendré entre la première électrode d'initiation et la première électrode auxiliaire, le courant circulant entre le premier point et le deuxième point en passant par la première branche.

Le dispositif de protection tel que décrit ci-avant permet donc de s'affranchir de la mise en série de deux éclateurs tout en profitant d'un encombrement réduit.

Le premier arc électrique d'initiation permet l'apparition du premier arc électrique d'amorçage entre l'électrode d'initiation et l'électrode d'amorçage.

Ainsi la première branche n'est plus passante et le deuxième arc électrique d'initiation est engendré entre la deuxième électrode d'initiation et la deuxième électrode auxiliaire. Le courant circule alors dans la deuxième branche.

Enfin, le deuxième arc d'initiation permet l'apparition d'un deuxième arc d'amorçage entre la deuxième électrode d'initiation et la deuxième électrode d'amorçage.

La première branche et la deuxième branche ne sont plus passantes et le courant circule entre le premier point et le deuxième point en passant par le premier éclateur via le premier arc d'amorçage et par le deuxième éclateur via le deuxième arc d'amorçage.

Ainsi le choix de l'impédance du premier composant impédant est suffisant pour provoquer l'initiation du deuxième éclateur.

Selon un aspect de l'invention, le premier composant impédant et/ou le deuxième composant impédant comprennent chacun une résistance et/ou une varistance.

Cette disposition permet de choisir le premier composant impédant et le deuxième composant impédant de manière à ce que la première branche, puis la deuxième branche, soient à tour de rôle passantes et ce plus ou moins longtemps.

Selon un aspect de l'invention, le premier composant impédant et/ou le deuxième composant impédant comprennent chacun au moins deux résistances montées en parallèle et/ou au moins deux varistances montées en parallèle.

Cette disposition permet d'ajuster plus finement l'impédance souhaitée pour le premier composant impédant et/ou le deuxième composant impédant.

Selon un aspect de l'invention, l'agencement de réduction de tension d'amorçage comprend une branche additionnelle reliant électriquement le premier point à la première branche, la branche additionnelle comprenant une diode et/ou un condensateur.

Cette disposition permet de diminuer la valeur du pic de tension au moment de la génération du premier arc d'initiation.

Selon un aspect de l'invention, la branche additionnelle comprend au moins deux condensateurs montés en parallèle entre deux bornes du composant résistif.

Selon un aspect de l'invention, la première branche comprend un fusible monté en série.

Cette disposition permet de protéger les composants de la première branche car elle est soumise à une forte tension lors de la formation du premier arc d'initiation.

Egalement, cette disposition est utile car elle permet d'éviter tout dommage en cas de mise en court-circuit accidentelle de la première électrode d'initiation et de la première électrode auxiliaire.

Selon un aspect de l'invention, le dispositif de protection contient un unique fusible monté en série sur la première branche.

Cette disposition est utile lorsque la deuxième branche est reliée électriquement au deuxième point. En effet, selon cette configuration, la première branche est forcément passante avant que la deuxième branche soit passante.

Ainsi seul un fusible monté en série sur la première branche est nécessaire pour protéger le dispositif de protection.

Selon un aspect de l'invention, la première branche comprend un indicateur visuel configuré pour signaler une fusion du fusible.

Cette disposition permet de détecter facilement le moment de changement du fusible. De préférence, l'indicateur visuel est monté en série sur la première branche ou en parallèle du fusible.

Selon un aspect de l'invention, le dispositif de protection comprend en outre un éclateur additionnel pourvu de deux électrodes additionnelles, ledit éclateur additionnel étant monté en série sur la première branche.

Cette disposition permet d'éviter les initiations intempestives de la première branche. De préférence, l'éclateur additionnel comprenant une chambre de gaz dans laquelle sont disposées les deux électrodes additionnelles.

Selon un aspect de l'invention, la première électrode d'initiation est séparée de la première électrode auxiliaire d'une première distance, la première distance autorisant la création d'un arc électrique suffisamment énergétique pour provoquer l'ionisation de l'air compris entre la première électrode d'initiation et la première électrode d'amorçage sans pour autant provoquer de court-circuit.

Ainsi la première distance est définie de manière à éviter une mise en court-circuit en cas d'échauffement anormal. Selon un aspect de l'invention, la première distance est comprise entre 50 et 100 microns, de préférence elle est égale ou sensiblement égale à 80 microns.

Selon un aspect de l'invention, la deuxième électrode d'initiation est séparée de la deuxième électrode auxiliaire d'une deuxième distance, la deuxième distance autorisant la création d'un arc électrique suffisamment énergétique pour provoquer l'ionisation de l'air compris entre la deuxième électrode d'initiation et la deuxième électrode d'amorçage sans pour autant provoquer de court-circuit.

Ainsi la deuxième distance est définie de manière à éviter une mise en court-circuit en cas d'échauffement anormal. Selon un aspect de l'invention, la deuxième distance est comprise entre 50 et 100 microns, de préférence elle est égale ou sensiblement égale à 80 microns.

Selon un aspect de l'invention, la première électrode d'initiation et la première électrode auxiliaire sont séparées par de l'air et/ou par un matériau au moins partiellement isolant du dispositif de protection.

Cette disposition permet de définir la valeur de la tension d'initiation entre la première électrode d'initiation et la première électrode auxiliaire. Cette disposition limite également l'apparition d'un court-circuit intempestif.

Selon un aspect de l'invention, la deuxième électrode d'initiation et la deuxième électrode auxiliaire sont séparées par de l'air et/ou un matériau au moins partiellement isolant.

Cette disposition permet de définir la valeur de la tension d'initiation entre la deuxième électrode d'initiation et la deuxième électrode auxiliaire.

Selon un aspect de l'invention, le dispositif de protection comprend également :
- une première chambre de déionisation configurée pour interrompre un courant circulant entre la première électrode d'initiation et la première électrode d'amorçage, et/ou
- une deuxième chambre de déionisation configurée pour interrompre un courant circulant entre la deuxième électrode d'initiation et la deuxième électrode d'amorçage.

Cette disposition permet de limiter dans le temps l'apparition d'un arc électrique entre la première électrode d'initiation et la première électrode d'amorçage d'une part et/ou entre le deuxième électrode d'initiation et la deuxième électrode d'amorçage d'autre part.

Chaque chambre de déionisation est une chambre de coupure. De préférence, chaque chambre de déionisation comprend une pluralité de plaques métalliques correspondantes parallèles entre elles et isolées afin de séparer un arc électrique en plusieurs arcs placés en série entre les plaques.

Cette disposition permet de faire augmenter la tension entre l'électrode d'initiation et l'électrode d'amorçage correspondante suite à l'apparition d'un arc électrique. En effet, les arcs créés entre les plaques s'additionnent de manière à ce que la tension nécessaire au maintien des arcs augmente.

Le fait que le dispositif de protection comprenne un premier éclateur et un deuxième éclateur et non un unique éclateur permet de réduire l'encombrement du dispositif de protection.

En effet, un unique éclateur nécessiterait une chambre de déionisation comprenant un nombre important de plaques contrairement à deux chambres de déionisation plus petites.

Selon un aspect de l'invention, le dispositif de protection comprend en outre un éclateur supplémentaire pourvu d'une électrode d'initiation supplémentaire et d'une électrode d'amorçage supplémentaire distante ;
l'agencement de réduction de tension d'amorçage comprenant une électrode auxiliaire supplémentaire disposée entre l'électrode d'initiation supplémentaire et l'électrode d'amorçage supplémentaire ;
l'agencement de réduction de tension d'amorçage comprenant en outre une branche supplémentaire dotée d'un composant impédant supplémentaire.

Cette disposition permet de profiter d'une bonne capacité pour l'utilisation sur des réseaux à fort courant de court-circuit et/ou sous une tension élevée et également de réduire la durée d'initiation du fait de la tension seuil limitée.

L'ajout d'un éclateur supplémentaire accentue cet avantage du fait de l'amorçage en cascade.

Selon un aspect de l'invention, la branche supplémentaire relie électriquement l'électrode auxiliaire supplémentaire au deuxième point. De préférence, l'éclateur supplémentaire est monté en série entre le premier éclateur et le deuxième éclateur.

Cette disposition permet de s'assurer que la première branche sera la première à être passante avant la branche supplémentaire et ensuite la deuxième branche.

Selon un aspect de l'invention, le dispositif de protection comprend une pluralité d'éclateurs supplémentaires, une pluralité d'électrodes auxiliaires supplémentaires correspondantes et de branches supplémentaires correspondantes.

Cette disposition permet d'allonger l'amorçage en cascade selon la configuration de l'installation dans laquelle est installée le dispositif de protection.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
- la figure 1 est une vue schématique d'un dispositif de protection ;
- la figure 2 est une vue schématique d'un dispositif de protection ;
- la figure 3 est un graphique d'évolution temporelle d'une tension aux bornes du dispositif de protection de la figure 2 ;
- la figure 4 est une vue schématique d'une variante de réalisation du dispositif de protection ;
- la figure 5 est un graphique d'évolution temporelle d'une tension aux bornes du dispositif de protection de la figure 4 ;
- les figures 6 à 8 sont des vues schématiques représentant les courants circulant dans le dispositif de protection ;
- les figures 9 et 13 sont deux vues schématiques de variantes du dispositif de protection.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

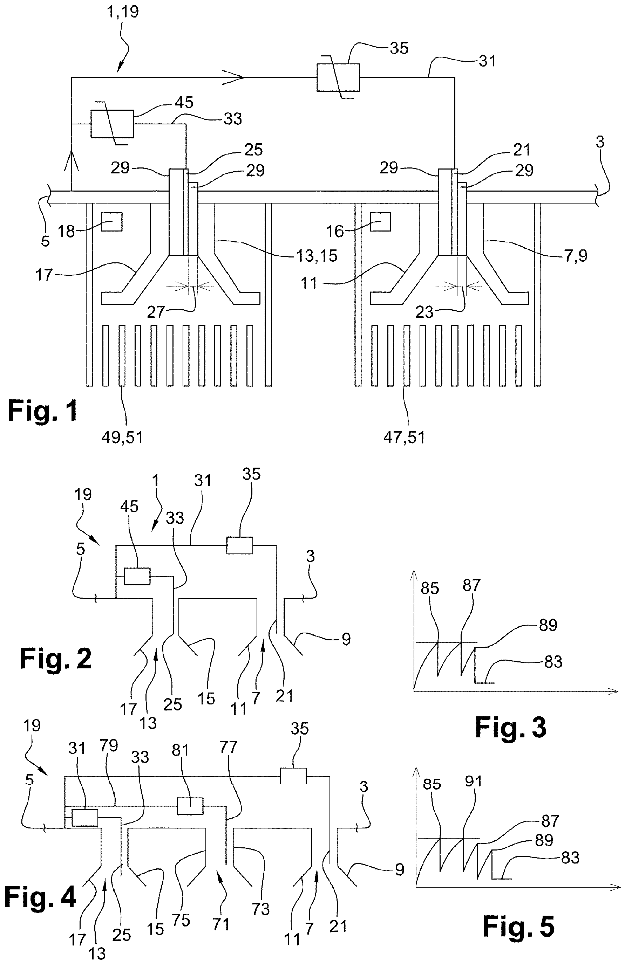

Comme illustré à la figure 1, un dispositif de protection 1 présente un premier point 3 et un deuxième point 5, le dispositif de protection 1 étant configuré pour permettre la circulation d'un courant de décharge entre le premier point 3 et le deuxième point 5.

Le courant de décharge ne circule que lorsqu'une tension entre le premier point 3 et le deuxième point 5 est supérieure à une tension seuil ou tension d'amorçage du dispositif de protection 1.

Le dispositif de protection 1 comprend un premier éclateur 7 pourvu d'une première électrode d'initiation 9 et d'une première électrode d'amorçage 11. Le dispositif de protection 1 comprend également un deuxième éclateur 13 pourvu d'une deuxième électrode d'initiation 15 et d'une deuxième électrode d'amorçage 17.

Comme illustré à la figure 1, le premier éclateur 7 et le deuxième éclateur 13 sont montés en série. La première électrode d'initiation 9 est électriquement reliée au premier point 3 et la deuxième électrode d'amorçage 17 est électriquement reliée au deuxième point 5.

Le premier éclateur 7 s'étend selon un premier plan 16 et le deuxième éclateur 13 s'étend selon un deuxième plan 18. Dans la vue schématique de la figure 1, le premier plan 16 et le deuxième plan 18 sont confondus et correspondent au plan de la figure.

En pratique, il est possible de disposer le premier plan 16 parallèlement au deuxième plan 18 de manière à ce que le premier éclateur 7 soit en regard du deuxième éclateur 13, le premier point 3 étant en regard du deuxième point 5. Cette superposition permet d'obtenir un dispositif de protection 1 compact.

Le dispositif de protection 1 comprend par ailleurs un agencement de réduction de tension d'amorçage 19 comprenant une première électrode auxiliaire 21 disposée à une première distance 23 de la première électrode d'initiation 21 et une deuxième électrode auxiliaire 25 disposée à une deuxième distance 27 de la deuxième électrode d'initiation 15.

La première distance 23 doit être aussi faible que possible sans provoquer de court-circuit entre la première électrode d'initiation 9 et la première électrode auxiliaire 21. Elle doit permettre la création d'un arc électrique suffisamment énergétique pour provoquer l'ionisation de l'air compris entre la première électrode d'initiation 9 et la première électrode d'amorçage 11 du premier éclateur 7. Ainsi la première distance 23 est définie de manière à éviter une mise en court-circuit en cas d'échauffement anormal. La première distance 23 est comprise entre 50 et 100 microns, de préférence elle est égale ou sensiblement égale à 80 microns.

La deuxième distance 27 est définie de la même manière.

De l'air peut être compris entre la première électrode d'initiation 9 et la première électrode auxiliaire 21. Le dispositif de protection 1 peut également comprendre un matériau au moins partiellement isolant 29 disposé entre la première électrode d'initiation 9 et la première électrode auxiliaire 21.

Il est de même pour l'espace entre la deuxième électrode d'initiation 15 et la deuxième électrode auxiliaire 25.

L'agencement de réduction de tension d'amorçage 19 comprend une première branche 31 reliant électriquement la première électrode auxiliaire 21 au deuxième point 5.

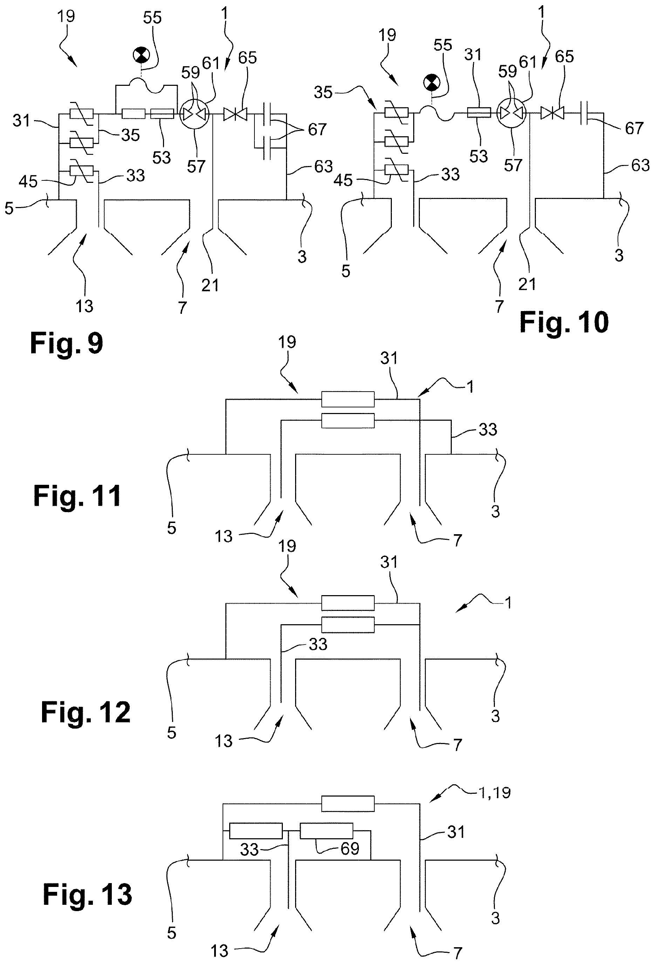

L'agencement de réduction de tension d'amorçage 19 comprend une deuxième branche 33 reliant électriquement la deuxième électrode auxiliaire 25 et, selon les variantes, le deuxième point 5 comme aux figures 1, 2, 4, 6 à 10 et 13 ou la première électrode auxiliaire 21 comme à la figure 12 ou le premier point 3 comme à la figure 11.

La première branche 31 comprend un premier composant impédant 35 monté en série qui peut être une résistance ou une varistance. Alternativement comme aux figures 10 et 11, le premier composant impédant 35 peut comprendre deux résistances ou deux varistances montées en parallèle.

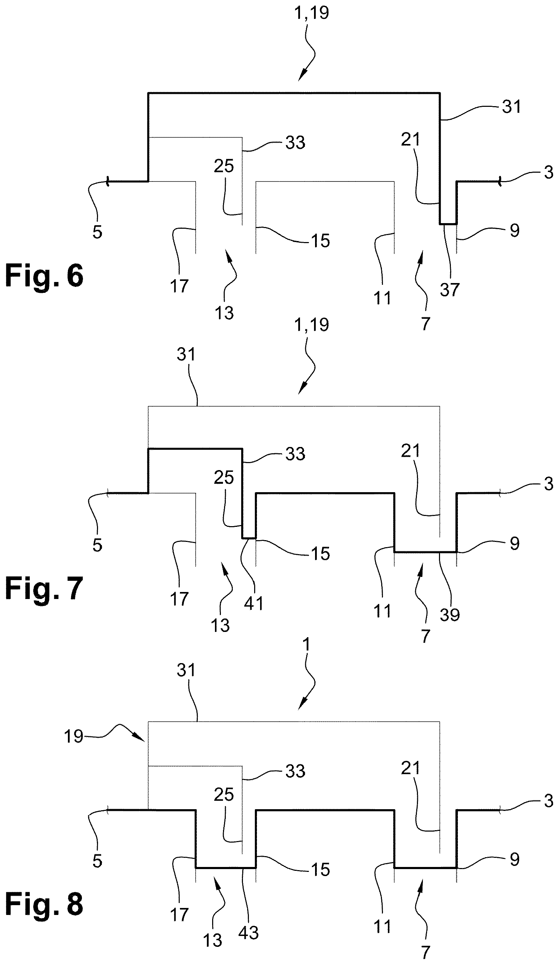

Comme illustré aux figures 6 à 8, le premier composant impédant 35 présente une impédance définie de manière à ce que, lorsqu'un courant circule dans la première branche 31 et qu'un premier arc électrique d'initiation 37 est formé entre la première électrode d'initiation 9 et la première électrode auxiliaire 21, un premier arc d'amorçage 39 se forme ensuite entre la première électrode d'initiation 9 et la première électrode d'amorçage 11.

Un deuxième arc d'initiation 41 se forme ensuite entre la deuxième électrode d'initiation 15 et la deuxième électrode auxiliaire 25.

En d'autres termes, lorsque la tension appliquée entre le premier point 3 et le deuxième point 5 est supérieure à la tension seuil, le premier arc électrique d'initiation 37 est engendré, le courant circulant entre le premier point 3 et le deuxième point 5 en passant par la première branche 31.

Le dispositif de protection 1 tel que décrit ci-avant permet donc de s'affranchir de la mise en série de deux éclateurs tout en profitant d'un encombrement réduit.

Le premier arc électrique d'initiation 37 facilite l'apparition du premier arc électrique d'amorçage 39 en ionisant l'air entre la première électrode d'initiation 9 et la première électrode auxiliaire 21. Ainsi la première branche 31 n'est plus passante et le deuxième arc électrique d'initiation 41 est engendré. Le courant circule alors dans la deuxième branche 33.

Enfin, le deuxième arc d'initiation 41 permet l'apparition d'un deuxième arc d'amorçage 43 entre la deuxième électrode d'initiation 15 et la deuxième électrode d'amorçage 25.

La première branche 31 et la deuxième branche 33 ne sont plus passantes et le courant circule entre le premier point 3 et le deuxième point 5 en passant par le premier éclateur 7 via le premier arc d'amorçage 39 et par le deuxième éclateur 13 via le deuxième arc d'amorçage 43.

Ainsi le choix de l'impédance du premier composant impédant 35 est suffisant pour provoquer l'initiation du deuxième éclateur 13.

La deuxième branche 33 comprend un deuxième composant impédant 45 pouvant également comprendre au moins une résistance et/ou varistance.

Comme illustré à la figure 1, le dispositif de protection 1 comprend une première chambre de déionisation 47 et une deuxième chambre de déionisation 49.

La première chambre de déionisation 47 est configurée pour interrompre un courant circulant entre la première électrode d'initiation 9 et la première électrode d'amorçage 11, et la deuxième chambre de déionisation 49 est configurée pour interrompre un courant circulant entre la deuxième électrode d'initiation 15 et la deuxième électrode d'amorçage 17.

Cette disposition permet d'interrompre l'arc électrique entre la première électrode d'initiation 9 et la première électrode d'amorçage 11 d'une part et/ou entre le deuxième électrode d'initiation 15 et la deuxième électrode d'amorçage 17 d'autre part.

Chaque chambre de déionisation 47, 49 est une chambre de coupure. De préférence, chaque chambre de déionisation 47, 49 comprend une pluralité de plaques métalliques 51 correspondantes parallèles entre elles et isolées afin de séparer un arc électrique en plusieurs arcs placés en série entre les plaques 51.

Cette disposition permet de faire augmenter la tension entre l'électrode d'initiation 9, 15 et l'électrode d'amorçage 11, 17 correspondante suite à l'apparition d'un arc électrique. En effet, les arcs créés entre les plaques 51 s'additionnent de manière à ce que la tension nécessaire au maintien des arcs augmente.

Le fait que le dispositif de protection 1 comprenne un premier éclateur 7 et un deuxième éclateur 13 et non un unique éclateur permet de réduire l'encombrement du dispositif de protection 1, en permettant notamment de placer côte à côte le premier et le deuxième éclateur.

En effet, un unique éclateur nécessiterait une chambre de déionisation comprenant un nombre important de plaques 51 contrairement à deux chambres de déionisation plus petites.

Comme illustré aux figures 9 et 10, l'agencement de réduction de tension d'amorçage 19 comprend un fusible 53 monté en série sur la première branche 31 et un indicateur visuel 55 configuré pour signaler une fusion du fusible 53.

L'indicateur visuel 55 est monté en série sur la première branche 31 ou en parallèle du fusible 53.

Le dispositif de protection 1 peut également comprendre un éclateur additionnel 57 pourvu de deux électrodes additionnelles 59 montées en série sur la première branche 31. L'éclateur additionnel 57 comprend également une chambre de gaz 61 dans laquelle sont disposés les deux électrodes additionnelles 59.

Le dispositif de protection 1 peut comprendre une branche additionnelle 63 reliant électriquement le premier point 3 à la première branche 31, la branche additionnelle 63 étant pourvue d'une diode 65 et d'un ou plusieurs condensateurs 67, par exemple deux montés en parallèle afin de supprimer un éventuel pic de tension au moment de l'amorçage.

Selon la variante de la figure 13, une impédance 69 a été ajoutée entre la deuxième électrode auxiliaire 25 et la deuxième électrode d'initiation 15.

Comme illustré à la figure 4, le dispositif de protection 1 peut comprendre un éclateur supplémentaire 71.

L'éclateur supplémentaire 71 est pourvu d'une électrode d'initiation supplémentaire 73 et d'une électrode d'amorçage supplémentaire 75 distante.

L'agencement de réduction de tension d'amorçage 19 comprend une électrode auxiliaire supplémentaire 77 disposée entre l'électrode d'initiation supplémentaire 73 et l'électrode d'amorçage supplémentaire 75.

L'agencement de réduction de tension d'amorçage 19 comprend en outre une branche supplémentaire 79 dotée d'un composant impédant supplémentaire 81 défini à la manière du premier composant impédant 35 et du deuxième composant impédant 45.

Cette disposition permet de profiter d'une bonne capacité pour une utilisation sur des réseaux à fort courant de court-circuit et/ou sous une tension élevée et également de réduire la durée d'initiation du fait de la tension seuil limitée.

L'ajout d'un éclateur supplémentaire 71 accentue cet avantage du fait de l'amorçage en cascade.

La branche supplémentaire 79 relie électriquement l'électrode auxiliaire supplémentaire 77 au deuxième point 5 et l'éclateur supplémentaire 71 est monté en série entre le premier éclateur 7 et le deuxième éclateur 13.

Cette disposition permet de s'assurer que la première branche 31 sera la première à être passante avant la branche supplémentaire 79 et ensuite la deuxième branche 33.

Aux figures 3 et 5 ont été représentées les évolutions temporelles de la tension 83 entre les points 1 et 2 en correspondance avec les dispositifs de protection 1 des figures 2 et 4. Le premier pic 85 précède la circulation du courant dans la première branche 31 et la formation du premier arc d'initiation 41.

Pour la figure 3, le deuxième pic 87 précède la circulation du courant dans la deuxième branche 33 et la formation du premier arc d'amorçage 39. Le troisième pic 89 précède la circulation du courant à travers le premier éclateur 11 et le deuxième éclateur 13, le premier arc d'amorçage 39 et le deuxième arc d'amorçage 43 étant alors formés.

Pour la figure 5, on note la présence d'un pic supplémentaire 91 dû à l'éclateur supplémentaire 71.

Il apparait donc que le dispositif de protection 1 n'engendre pas de pic supérieur au premier pic 85. Cette disposition permet de définir une tension seuil assez basse pour un amorçage rapide tout en permettant le passage d'un courant important.

Comme il va de soi, l'invention ne se limite pas à la seule forme d'exécution décrite ci-dessus à titre d'exemple, elle en embrasse au contraire toutes les variantes de réalisation, notamment la pluralité d'éclateurs. La figure 4 montre un exemple à trois dispositifs d'amorçage.

## Revendications

1. Dispositif de protection (1) configuré pour permettre une circulation d'un courant de décharge entre un premier point (3) du dispositif de protection (1) et un deuxième point (5) du dispositif de protection (1) lorsqu'une tension appliquée entre le premier point (3) et le deuxième point (5) est supérieure à une tension seuil, le dispositif de protection (1) comprenant :
- un premier éclateur (7) pourvu d'une première électrode d'initiation (9) et d'une première électrode d'amorçage (11) distante ; un deuxième éclateur (13) pourvu d'une deuxième électrode d'initiation (15) et d'une deuxième électrode d'amorçage (17) distante ; la première électrode d'initiation (9) étant reliée électriquement au premier point (3) et la deuxième électrode d'amorçage (17) étant reliée électriquement au deuxième point (5) ; la première électrode d'amorçage (11) étant reliée électriquement à la deuxième électrode d'initiation (15) ;
- un agencement de réduction de tension d'amorçage (19) pourvu d'une première électrode auxiliaire (21) disposée entre la première électrode d'initiation (9) et la première électrode d'amorçage (11) et d'une deuxième électrode auxiliaire (25) disposée entre la deuxième électrode d'initiation (15) et la deuxième électrode d'amorçage (17) ;
l'agencement de réduction de tension d'amorçage (19) comprenant en outre une première branche (31) dotée d'un premier composant impédant (35) et une deuxième branche (33) dotée d'un deuxième composant impédant (45) ; la première branche (31) reliant électriquement la première électrode auxiliaire (21) au deuxième point (5).

2. Dispositif de protection (1) selon la revendication 1, dans lequel la deuxième branche (33) relie électriquement la deuxième électrode auxiliaire (25) au deuxième point (5).

3. Dispositif de protection (1) selon la revendication 1, dans lequel la deuxième branche (33) relie électriquement la deuxième électrode auxiliaire (25) à la première électrode auxiliaire (21).

4. Dispositif de protection (1) selon la revendication 1, dans lequel la deuxième branche (33) relie électriquement la deuxième électrode auxiliaire (25) au premier point (3).

5. Dispositif de protection (1) selon l'une des revendications 1 à 4, dans lequel le premier composant impédant (35) présente une impédance définie de manière à ce que, lorsqu'un courant circule dans la première branche (33) et qu'un premier arc électrique d'initiation (37) est formé entre la première électrode d'initiation (9) et la première électrode auxiliaire (21), un premier arc d'amorçage (39) se forme ensuite entre la première électrode d'initiation (9) et la première électrode d'amorçage (11) et un deuxième arc d'initiation (41) se forme entre la deuxième électrode d'initiation (15) et la deuxième électrode auxiliaire (25).

6. Dispositif de protection (1) selon l'une des revendications 1 à 5, dans lequel le premier composant impédant (35) et/ou le deuxième composant impédant (45) comprennent chacun une résistance et/ou une varistance.

7. Dispositif de protection (1) selon l'une des revendications 1 à 6, dans lequel l'agencement de réduction de tension d'amorçage (19) comprend une branche additionnelle (63) reliant électriquement le premier point (3) à la première branche (31), la branche additionnelle (63) comprenant une diode (65) et/ou un condensateur (67).

8. Dispositif de protection (1) selon l'une des revendications 1 à 7, dans lequel la première branche (31) comprend un fusible (53) monté en série.

9. Dispositif de protection (1) selon la revendication 8, dans lequel la première branche (31) comprend un indicateur visuel (55) configuré pour signaler une fusion du fusible (53).

10. Dispositif de protection (1) selon l'une des revendications 1 à 9, comprenant en outre un éclateur additionnel (57) pourvu de deux électrodes additionnelles (59), ledit éclateur additionnel (57) étant monté en série sur la première branche (31).

11. Dispositif de protection (1) selon l'une des revendications 1 à 10, dans lequel la première électrode d'initiation (9) est séparée de la première électrode auxiliaire (21) d'une première distance (23), la première distance (23) autorisant la création d'un arc électrique suffisamment énergétique pour provoquer l'ionisation de l'air compris entre la première électrode d'initiation (9) et la première électrode d'amorçage (11) sans pour autant provoquer de court-circuit.

12. Dispositif de protection (1) selon l'une des revendications 1 à 11, dans lequel la première électrode d'initiation (9) et la première électrode auxiliaire (21) sont séparées par de l'air et/ou par un matériau au moins partiellement isolant (29) du dispositif de protection (1).

13. Dispositif de protection (1) selon l'une des revendications 1 à 12, comprenant également :
- une première chambre de déionisation (47) configurée pour interrompre un courant circulant entre la première électrode d'initiation (9) et la première électrode d'amorçage (11), et/ou
- une deuxième chambre de déionisation (49) configurée pour interrompre un courant circulant entre la deuxième électrode d'initiation (15) et la deuxième électrode d'amorçage (17).

14. Dispositif de protection (1) selon l'une des revendications 1 à 13, comprenant en outre un éclateur supplémentaire (71) pourvu d'une électrode d'initiation supplémentaire (73) et d'une électrode d'amorçage supplémentaire (75) distante ;
l'agencement de réduction de tension d'amorçage (19) comprenant une électrode auxiliaire supplémentaire (77) disposée entre l'électrode d'initiation supplémentaire (73) et l'électrode d'amorçage supplémentaire (75) ;
l'agencement de réduction de tension d'amorçage (19) comprenant en outre une branche supplémentaire (79) dotée d'un composant impédant supplémentaire (81).
